# EUROPÄISCHE PATENTANMELDUNG

(11) **EP 1 081 393 A1**
(43) Veröffentlichungstag der Anmeldung: **07.03.2001**
(21) Anmeldenummer: 00119047.9
(22) Anmeldetag: 02.09.2000
(51) Int. Cl.: F16B 12/46, F16B 12/44, F16B 5/06, A47K 3/28, E04F 19/06

(54) **Verbindungselement zur Verbindung von Platten**

(30) Priorität: 06.09.1999 EP 99810798
(71) Anmelder: INVENTIO AG, CH-6052 Hergiswil NW (CH)
(72) Erfinder: Abbrederis, Heinrich, 6973 Höchst (AT)

(57) **Zusammenfassung**

Das Verbindungselement (1) zur rechtwinkligen Verbindung von Platten (2) besteht im wesentlichen aus einem Aussenprofil (3) und einem Innenprofil (4), die zueinander fluchtende Bohrungen (5,5') aufweisen. Mittels in die Bohrungen (5,5') eingesetzten Schrauben (6) werden die Profile zusammengeschraubt und die dazwischenliegenden Platten (2) somit verbunden. Die Schrauben (6) werden von der Seite des Innenprofils (4,4') her in die Bohrungen (5.5') eingeführt und von einem Abdeckprofil (7) verdeckt. Die Platten werden für den Bau von geschlossenen oder offenen Räumen oder Zellen aller Art, insbesondere von Nasszellen, verwendet.

## Beschreibung

Die Erfindung geht aus von einem Verbindungselement nach dem Oberbegriff des Anspruchs 1.

Aus der SU 420531 ist ein Verbindungselement zur Verbindung zweier senkrecht zueinander stehender plattenartiger Paneele einer Aufzugskabine bekannt. Es besteht aus einem Aussenprofil, dessen zwei rechtwinklig zueinander stehende Profilschenkel an den Aussenseiten der Paneele anliegen und aus einem Innenprofil, das an den Innenseiten der Paneele dem Aussenprofil entgegengegengehalten wird. Das Aussenprofil weist an seiner Ecke eine Durchgangsbohrung auf, die mit einer nicht durchgehenden Bohrung des Innenprofils fluchtet. Mittels einer von der Aussenseite des Aussenprofils her in die Bohrungen einführbaren Schraube werden die beiden Profile zusammengeschraubt und die dazwischenliegenden plattenähnlichen Paneele fest verbunden.

Nachteilig bei diesem Verbindungselement ist die unpraktische Anbringung der Schraube, die zwangsläufig von hinten, d.h. von der Aussenseite des Aussenprofils her eingesteckt und geschraubt werden muss. Die zu verbindenden Paneele müssen zuerst miteinander fertig verbunden werden und dann an den für sie vorgesehenen Platz transportiert werden, wenn sie dort von aussen nicht mehr zugänglich sind. Aus dem ist leicht verständlich, dass die Montage in dieser Weise recht zeitaufwendig und kaum durch eine einzige Person durchführbar ist. Problematisch sind ferner auch das Ersetzen und der Unterhalt der Verbindungselemente. Bei Bruch oder Verschleiss ist das Ersetzen der Verbindungselememte kaum möglich, ohne die Paneele von ihrer funktionellen Position zu entfernen, insbesondere, dann wenn es keinen freien Zugang zu der Aussenseite der Paneele und keinen leeren Raum hinter den Paneelen gibt. Das gleiche passiert auch bei unbeabsichtigtem Lockern der Schraube: Allein das Wiederanschrauben ist von aussen ohne geeigneten freien Raum problematisch. Die Montage und der Unterhalt dieser Verbindungselemente ist also insgesamt problematisch, zeitaufwendig, kompliziert und kaum praktikabel.

Das erfindungsgemässe Verbindungselement mit den kennzeichnenden Merkmalen des Anspruchs 1 hat demgegenüber den Vorteil, dass eine präzise, unproblematische und rasche Verbindung der Platten möglich wird, was die Montage und den Unterhalt erleichtert. Gleichzeitig wird ein einfacher Zugang zur Verbindungsstelle geschaffen.

Durch die in den abhängigen Ansprüchen aufgeführten Massnahmen sind vorteilhafte Weiterbildungen und Verbesserungen des im Anspruch 1 angegebenen Verbindungselementes möglich.

Besonders vorteilhaft ist die Ausbildung des Verbindungselementes als Eckverbinder, damit auch nicht fluchtende Platten fest verbunden werden können.

Vorteilhaft ist weiter das Vorhandensein eines Abdeckprofils auf dem Innenprofil, um die Schrauben von innen unsichtbar zu machen und sie vor Vandalismus zu schützen.

Ein weiterer Vorteil ist darin zu sehen, dass das Abdeckprofil mit Hilfe eines Doppelklebebandes auf das Innenprofil geklebt ist, um eine starke Klebeverbindung herzustellen.

Vorteilhaft ist weiter das Vorsehen eines Abdeckprofils mit abgeschrägten Ecken, um dieses in eine schwalbenschwanzförmige Nut des Innenprofils durch ein einfaches Hineindrücken einrasten zu lassen. Es sind damit keine zusätzlichen Befestigugsmittel für das Abdeckprofil nötig.

Das Innenprofil ist vorteilhaft im wesentlichen abgerundet, damit eine leichte Reinigung der inneren annähernd runden Ecke möglich ist. Das vorzugsweise im wesentlichen abgerundete Aussenprofil schliesst Verletzungsgefahren an der Aussenseite der Verbindungsstelle aus.

Ein weiterer Vorteil ist darin zu sehen, dass das Aussenprofil auf seiner den zu verbindenden Platten zugewandten Fläche mindestens einen Vorsprung aufweist, der mit einer Nut in der Platte zusammenwirkt. Bei unbeabsichtigtem Lockern der Plattenverbindung wird damit eine Desintegration der Verbindung verhindert.

Alle erläuterten Merkmale sind nicht nur in der jeweils angegebenen Kombination, sondern auch in anderen Kombinationen oder in Alleinstellung verwendbar, ohne den Rahmen der Erfindung zu verlassen.

Verschiedene Ausführungsbeispiele der Erfindung sind in den schematischen Zeichnungen dargestellt und in der nachfolgenden Beschreibung näher erläutert. Es zeigen:
Fig. 1 eine Explosionsdarstellung des Verbindungselementes bei einer rechtwinkligen Verbindung zweier Platten im Horizontalschnitt,

Fig. 2 das Verbindungselement aus Fig.1 im montierten Zustand,
Fig. 3 das Verbindungselement bei einer Verbindung von drei Platten in T-Form im Horizontalschnitt,
Fig. 4 eine Explosionsdarstellung des Verbindungselementes bei einer rechtwinkligen Verbindung zweier Platten in einer weiteren Ausführungsform im Horizontalschnitt,
Fig. 5 das Verbindungselement aus Fig.4 im montierten Zustand in Horizontalschnittdarstellung.

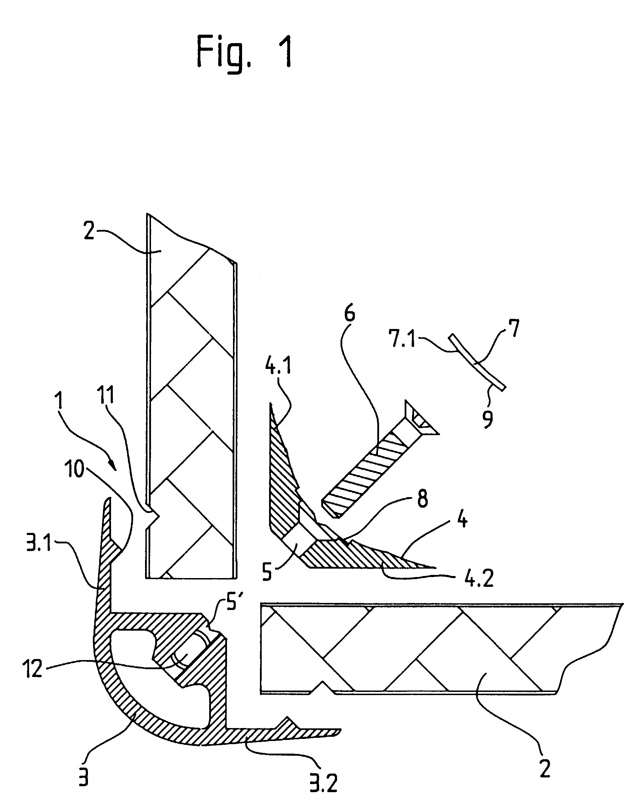

In Fig. 1 ist ein Verbindungselement 1 als Eckverbinder dargestellt, das zwei in einem Winkel, in der Ausführungsform im rechten Winkel, zueinander stehende Platten 2, beispielsweise einer Nasszelle, verbindet. Das Verbindungselement 1 besteht aus einem Aussenprofil 3, das zwei im beliebigen Winkel, bevorzugt wie hier im rechten Winkel stehende Profilschenkel 3.1 und 3.2 aufweist, und aus einem Innenprofil 4, das ebenfalls zwei Profilschenkel 4.1 und 4.2 aufweist. Das Innenprofil 4 weist ferner über die Länge des Profils verteilt angeordnete durchgehende Bohrungen 5 auf, die mit Bohrungen 5' des Aussenprofils 3 fluchten. Die beiden Profilschenkel 3.1 und 3.2 des Aussenprofils 3 werden an die Aussenseiten der zu verbindenden Platten 2 angelegt und die Profilschenkel 4.1 und 4.2 des Innenprofils 4 den Innenseiten der Platten 2 entgegengehalten. Schrauben 6 werden von der Innenseite der Zelle in die Bohrungen 5 eingesteckt und bis in die Bohrungen 5' eingeschraubt. Durch Festziehen der Schrauben 6 werden die beiden Profile 3 und 4 zusammengezogen und die dazwischenliegenden Platten 2 fest verbunden. Es entsteht somit eine kraft- und formschlüssige Verbindung.

Das Innenprofil 4 ist so ausgebildet, dass es ein Abdeckprofil 7, vorzugsweise ein dünnes Blechprofil, aufnehmen kann, um die Schraube 6 abzudecken. Das Abdeckprofil 7 kann beispielsweise eine Breite von ca. 16 mm, eine Länge entsprechend der Länge der Profile und eine Dicke von ca. 0.3 mm aufweisen. Zweckmässigerweise ist die nach innen schauende Oberfläche des Innenprofils 4 mit einer Befestigungsnut 8 für das Abdeckprofil 7 versehen. In einer bevorzugten Variante ist das Abdeckprofil 7 auf der dem Innenprofil 4 zugewandten Seite 7.1 mit Doppelklebeband 9 belegt. Durch Hineindrücken des Abdeckprofils 7 in die Befestigungsnut 8 wird somit eine starke Klebeverbindung hergestellt. Es können selbstverständlich auch andere Haftmittel verwendet werden.

Die nach innen schauende Fläche des Innenprofils 4 ist vorzugsweise abgerundet ausgebildet. In einer Ausführungsform entspricht sie im wesentlichen einem Oberflächenteil einer gedachten Kugel oder eines gedachten Zylinders, die das Zentrum innerhalb der zu bauenden Zelle haben. Die nach innen schauende Fläche des Innenprofils 4 ist also konkav gerundet ausgebildet. An der Innenseite der Verbindungsstelle entsteht somit eine runde Ecke, die auf diese Weise leicht gereinigt werden kann.

Das Aussenprofil 3 kann auch abgerundet, vorzugsweise in die gleiche Richtung wie das Innenprofil 4, ausgebildet sein, damit keine spitzen Ecken, um die Zelle herum, entstehen können. Das ist besonders vorteilhaft für die im freien Raum stehenden Zellen. Die sonst üblicherweise vorhandenen spitzen Ecken und Kanten können bei Kollisionen für Personen eine grosse Verletzungsgefahr darstellen. Ferner werden die spitzen Ecken und Kanten vielmals beschädigt.

Um das Aussenprofil 3 an den Platten 2 zusätzlich zu sichern, sind die Profilschenkel 3.1 und 3.2 mit Nasen 10 versehen, die in entsprechend korrespondierende Nuten 11 eingreifen, welche auf der Plattenoberfläche, beispielsweise durch Fräsen, ausgebildet sind.

Das Aussenprofil 3 weist ferner, vorzugsweise auf seinen Stirnseiten, Befestigungsbohrungen 12 auf, durch die es z.B. am Boden, an der Decke, usw. befestigt werden kann. Diese Befestigungsbohrungen 12 sind in einer bevorzugten Ausführungsform mit Innengewinde versehen.

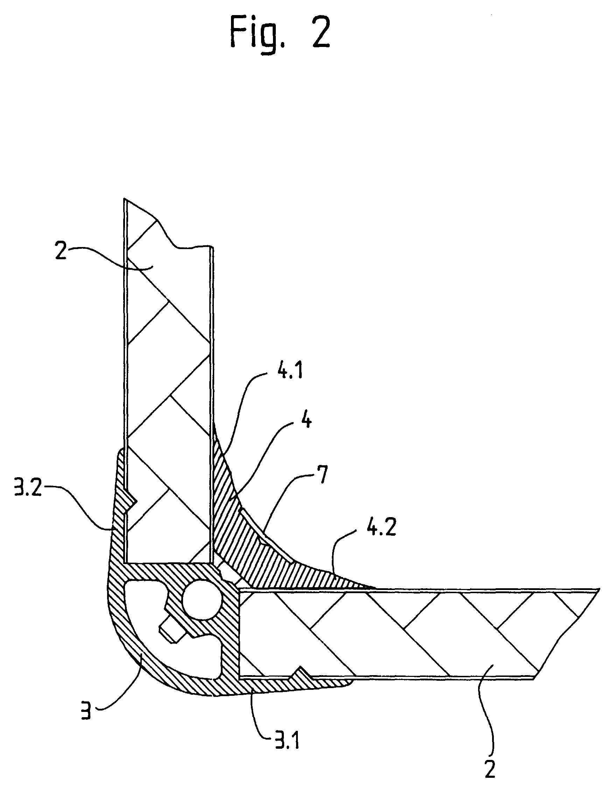

Aus Fig. 2 ist das Verbindungselement 1 zweier im rechten Winkel zueinander stehender Platten 2 in montiertem Zustand ersichtlich. Die kraft- und formschlüssige Verbindung der Platten 2 ist klar erkennbar.

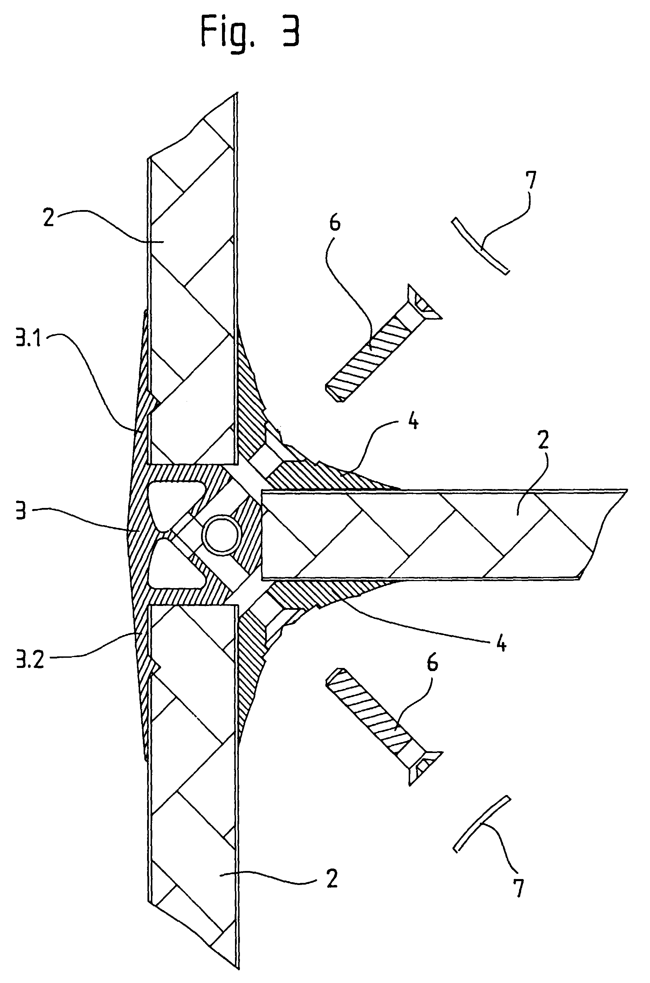

In Fig. 3 ist eine T-förmige Verbindung von drei Platten dargestellt. Zwei fluchtende Platten 2 und eine zu diesen senkrecht stehende Platte 2 sind mit einem Verbindungselement 1 gemäss der Erfindung miteinander verbunden. Das Aussenprofil 3 ist annähernd flach ausgebildet und weist in seiner Mitte, d.h. im Bereich des Raums zwischen den fluchtenden Platten 2, eine dickere Wandstärke auf. Seine Profilschenkel 3.1 und 3.2 liegen je auf der Aussenfläche der jeweiligen fluchtenden Platten 2 an. An den zwei inneren Ecken werden zwei abgerundete Innenprofile 4 eingesetzt und mit Hilfe von zwei Schrauben 6 mit dem Aussenprofil 3, in der gleichen Weise wie oben beschrieben, verbunden. Zur Abdeckung der Schrauben 6 werden dann je ein Abdeckprofil 7 auf die Innenprofile 4 eingesetzt.

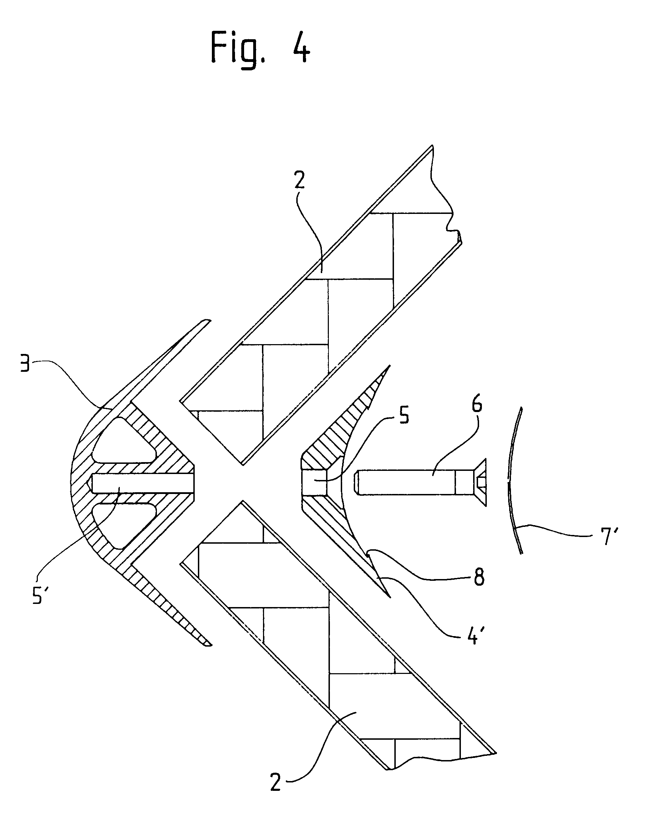

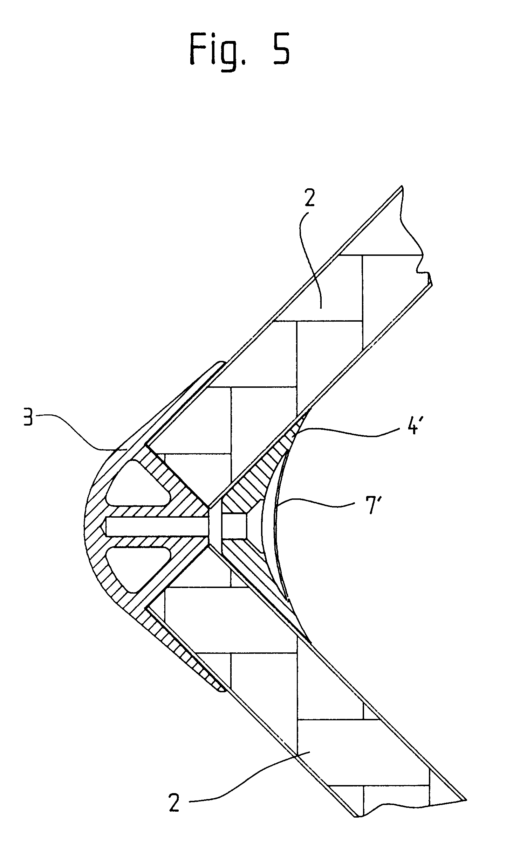

Fig. 4 und Fig. 5 zeigen, im unmontierten bzw. montierten Zustand, eine Eckverbindung zweier Platten 2 gemäss einer weiteren Ausführungsform des Verbindungselementes 1 nach der Erfindung. Das Verbindungselement 1 dieser Ausführungsform besteht im wesentlichen aus den gleichen Elementen wie das Verbindungselement gemäss Figuren 1 bis 3, sodass sich eine detalliertere Beschreibung der Figuren 4 und 5 erübrigt. Der wesentliche Unterschied zu der Ausführung aus den Figuren 1 bis 3 besteht darin, dass das Innenprofil 4' eine schwalbenschwanzförmige Nut 8 aufweist. Das Abdeckprofil 7' ist an den Ecken abgeschrägt, damit es sich durch Hineindrücken in die Schwalbenschwanzführung des Innenprofils 4' verankern kann.

Es sind natürlich auch andere Formen des Innenprofils und des auf diesem eingesetzten Abdeckprofil möglich. Eine feste Verbindung mit bündigen Sichtflächen zwischen Innenprofil und Abdeckprofil wird erreicht, wenn das Abdeckprofil in die zur Aufnahme komplementär ausgebildete Befestigungsnut des Innenprofils einrasten kann.

Die das Verbindungselement bildenden Profile bestehen vorzugsweise aus Aluminium oder Aluminium-Legierungen, die je nach Wunsch beispielsweise eloxiert, pulverbeschichtet oder lackiert werden können. Andere Materialien, wie z.B. Stahl, Kunststoff, usw. sind für die in dieser Erfindung vorgesehene Funktion ebenfalls zweckmässig und geeignet.

Die Plattenverbindung gemäss der Erfindung wird vorzugsweise wie folgt hergestellt:
Zuerst wird das Aussenprofil 3 gegen die äusseren Flächen der zu verbindenden Platten 2 und das Innenprofil 4,4' gegen die inneren Flächen der zu verbindenden Platten gehalten, dann wird die Schraube 6 in die fluchtenden Bohrungen 5,5' eingeschraubt, um die zwischen dem Aussenprofil 3 und dem Innenprofil 4, 4' liegenden Platten 2 kraft- und formschlüssig zu verbinden und anschliessend wird das Abdeckprofil 7, 7' auf das Innenprofil 4, 4' in die Befestigungsnut 8 des Innenprofils 4, 4' geklebt und/oder hineingedrückt.

Zur Ausführung der Erfindung ist keine oder nur eine geringe Bearbeitung der Platten erförderlich.

Die Festigkeit der Platten bleibt erhalten und die Festigkeit der Verbindung entspricht in etwa der Festigkeit der Platten. Auf diese Weise wird eine hohe Festigkeit erreicht.

Die zu verbindenden Platten sind vornehmlich kunststoffbeschichtete Holzplatten, mit Aluminium-Waben gefüllte Platten oder Phenolharzplatten. Alle anderen möglichen Platten können ebenfalls durch das erfindungsgemässe Verbindungselement verbunden werden.
Die Platten werden für den Bau von geschlossenen oder offenen Räumen oder Zellen aller Art, insbesondere von Nasszellen, verwendet.

## Patentansprüche

1. Verbindungselement (1) zur Verbindung von Platten (2) bestehend aus einem Aussenprofil (3) und einem Innenprofil (4, 4'), die zueinander fluchtende Bohrungen (5, 5') aufweisen, wobei das Aussenprofil (3) und das Innenprofil (4, 4') mittels mindestens einer in die Bohrungen (5, 5') eingesetzten Schraube (6) zusammengehalten sind, um die dazwischenliegenden Platten (2) zu verbinden, dadurch gekennzeichnet, dass die Schraube (6) von der Seite des Innenprofils (4, 4') her in die Bohrungen (5. 5') einführbar ist.

2. Verbindungselement nach Patentanspruch 1, dadurch gekennzeichnet, dass das Verbindungselement (1) ein Eckverbinder ist, der die Verbindung von den in einem Winkel, beispielsweise im rechten Winkel, zueinander stehenden Platten (2) ermöglicht.

3. Verbindungselement nach Patentanspruch 1 oder 2, dadurch gekennzeichnet, dass das Innenprofil (4, 4') so geformt ist, dass es zur Abdeckung der Schraube (6) ein Abdeckprofil (7, 7'), beispielsweise ein dünnes Blechprofil, aufnimmt.

4. Verbindungselement nach Patentanspruch 3, dadurch gekennzeichnet, dass auf der Oberfläche des Innenprofils (4, 4') eine Befestigungsnut (8) vorhanden ist, um das Abdeckprofil (7, 7') aufzunehmen.

5. Verbindungselement nach Patentanspruch 3 oder 4, dadurch gekennzeichnet, dass das Abdeckprofil (7, 7') auf das Innenprofil (4, 4') geklebt ist, beispielsweise mit Hilfe eines Doppelklebebandes (9).

6. Verbindungselement nach einem der Patentansprüche 3 bis 5, dadurch gekennzeichnet, dass das Abdeckprofil (7') an seinen Ecken abgeschrägt ist, um in eine schwalbenschwanzförmige Nut (8) des Innenprofils (4') einzurasten.

7. Verbindungselement nach einem der Patentansprüche 1 bis 6, dadurch gekennzeichnet, dass das Aussenprofil (3) und/oder das Innenprofil (4, 4') im wesentlichen abgerundet ausgebildet sind.

8. Verbindungselement nach einem der Patentansprüche 1 bis 7, dadurch gekennzeichnet, dass das Aussenprofil (3) auf seiner den zu verbindenden Platten (2) zugewandten Fläche mindestens einen Vorsprung (10) aufweist, der mit einer in der Platte (2) vorhandenen Nut (11) zusammenwirkt.

9. Nasszellen mit Verbindungselementen nach einem der Patentansprüche 1 bis 8.
